# EUROPÄISCHE PATENTSCHRIFT

(11) **EP 1 987 269 B1**
(45) Veröffentlichungstag und Bekanntmachung des Hinweises auf die Patenterteilung: **14.11.2012**
(21) Anmeldenummer: 07712022.8
(22) Anmeldetag: 15.01.2007
(51) Int. Cl.: F16G 5/20, D04B 21/00

(54) **KEILRIPPENRIEMEN MIT VERBESSERTEM GERÄUSCHVERHALTEN**
V-RIBBED BELT WITH IMPROVED NOISE PROPERTIES
COURROIES SILENCIEUCES A NERVURES EN BISEAU

(30) Priorität: 16.02.2006 DE 102006007509
(43) Veröffentlichungstag der Anmeldung: 05.11.2008
(73) Patentinhaber: ContiTech Antriebssysteme GmbH, 30165 Hannover (DE)
(72) Erfinder: KANZOW, Henning, 30519 Hannover (DE); MAHNKEN, Claus-Lüder, 27367 Ahausen (DE); NONNAST, Tobias, 30457 Hannover (DE); SCHLEICHER, Marko, 30926 Seelze (DE); TEVES, Reinhard, 30926 Seelze (DE)
(74) Vertreter: Finger, Karsten
(86) Internationale Anmeldenummer: PCT/EP2007/050311
(87) Internationale Veröffentlichungsnummer: WO 2007/093473

(56) Entgegenhaltungen:
- EP-A1- 0 662 571
- EP-B1- 1 088 177
- US-A- 3 724 284
- US-A- 3 981 206
- US-A- 4 027 545
- US-A- 4 169 393
- US-A- 4 464 153

## Beschreibung

Die Erfindung betrifft einen Keilrippenriemen aus Elastomermaterial mit eingebetteten Zugträgern, der mindestens auf einer ersten Seite in Längsrichtung des Keilrippenriemens verlaufende Rippen mit im wesentlichen keilförmigem Querschnitt aufweist, die durch thermoplastische Formgebung gebildet sind und diese erste Seite eine textile Schicht aufweist.

Die US3981206A beschreibt einen solchen Keilrippenriemen, bei dem im Formverfahren in die Oberfläche ein zweiseitig dehnbares gestricktes Textil aus einzelnen Fäden einvulkanisiert ist, bei dem die verwendeten Fäden ein Kombinationsgarn aus Filamenten von elastischem Polyurethan (hier Markenname Spandex, auch bekannt als Elasthan, Dorlastan oder Lycra) und Polyamid sind. In der US 4027545 ist die Anwendung derartiger Die Filamente sind dabei zu einem einzelnen Faden (Monofilament) verbunden. Keilrippenriemen konkretisiert und sind spezielle Einstellung dieser Riemen beschrieben.

Riemen dieser Ausführungen haben sich bislang nicht im Markt durchsetzen können, da die Kombinationsfäden, die durch Umwindung von Elasthanfäden um Polyamidfäden gebildet sind, nicht dauerhaft beständig sind und brechen. Durch die Umwindung der beiden Materialien wird dann das gesamte textile Gebilde brüchig und die Riemen fallen unter dynamischen Einsätzen im Motor häufig schnell aus.

Insbesondere die in dieser Schrift über die verwendeten Zeichnungen bevorzugte Strickart hat sich nicht bewährt, da diese schnell aufbricht.

Die in der US 4169393 offenbarte Lehre versucht, diesen Nachteil durch Einsatz von triaxialem Gewebe zu lösen, doch auch diese Maßnahme hat sich wegen schlechter dynamischer Haltbarkeit nicht im Markt durchsetzen können.

Auch der Einsatz von Kettwirkware auf der Oberfläche von Antriebsriemen ist bereits bekannt. Die US 3724284 beschreibt einen ummantelten Keilriemen, dessen Oberfläche mit einer kettgewirkten Textillage aus zwei verschiedenen Garnen beschichtet ist, wobei die Textillage zur Einstellung einer vorbestimmten konstruktionsbedingten Dehnung thermisch behandelt ist. Gewebe dieser Art aus nicht an sich elastischen Materialien sind für ummantelte Keilriemen gut geeignet und haben sich für solche Riemen auch in Fällen, bei denen die Herstellkosten für diese Riemen nicht so bedeutend sind, bewährt.

Ein Einsatz derartiger Textillagen in Keilrippenriemen ist jedoch bisher nicht möglich. Die Dehnung der Textillage ergibt sich allein durch die Konstruktion der Textillage. Daher ist hier die gleichzeitige Dehnbarkeit in der einen Richtung zum Ausformen der Rippen bei der Herstellung und in der anderen Richtung zur dauerhaften dynamischen Belastung während des Betriebes bei diesen Textillagen nicht gegeben.

Die US4464153 offenbart eine Lehre, bei der Keilriemen von der Beschichtung aus einer textilen Schicht, z.B. einem Gewebe, vollständig umgeben sind. Diese Beschichtungen auf ummantelten Keilriemen halten erfahrungsgemäß nicht bei Keilrippenriemen, da hier wesentlich größere Dehnungen im Gewebe vorkommen.

Neben der Dauerfestigkeit der Riemenoberflächen ist das Geräuschverhalten heute ebenfalls von großer Bedeutung. Da die Oberfläche der Wirkware rauh ist, kann es zu unerwünschter Geräuschentwicklung im Betrieb kommen.

Die EP662571 offenbart Beschichtungen von Riemenoberflächen zur Verminderung von Reibbeiwerten mit Kombinationsmitteln, in denen Fluorpolymere grenzschichtlos in Matrixmaterialien eingebunden sind. Diese grenzschichtlose Einbindung erfordert jedoch hohen technischen Aufwand und hat nicht so gute Geräuschverminderungen ergeben wie Materialien, die aus Fluorpolymeren bestehen, die mit Grenzschichten versehen in Trägermaterialien wie z.B. Polyurethanen eingebunden sind.

Die EP1088177 offenbart ein Verfahren, bei dem ein Gewebe einseitig mit einem verschleißmindernden Material behandelt wird, das aus einer vernetzten Matrix besteht und mit Gleitkörpern versehen ist. Dieses Verfahren lässt sich jedoch nur auf Gewebe anwenden, die Beschichtungen nicht vollständig durchlassen. Kettwirkware hingegen ist nach diesem Verfahren nicht behandelbar. Vielmehr muss eine nachträgliche Behandlung des mit Wirkware versehenen Riemens vorgenommen werden, da sonst eine Trennung von Wirkware und Riemen stattfindet.

Der Erfindung liegt die Aufgabe zugrunde, einen Keilrippenriemen der eingangs beschriebenen Art zu schaffen, der gegenüber den bekannten Keilrippenriemen eine verminderte Geräuschentwicklung bei gleichzeitiger hoher Lebensdauer unter Vermeidung der genannten Nachteile aufweist.

Diese Aufgabe wird dadurch gelöst, dass die textile Schicht als Kettwirkware mit zwei unterschiedlichen Garnen ausgebildet ist, wobei das erste Garn aus Filamenten mit einem Modul von mehr als 5N/1000dtex, bezogen auf 5% Dehnung und das zweite Garn aus Filamenten mit einem Modul von weniger als 002N/1000dtex, bezogen auf 5% Dehnung ausgebildet ist, wobei das erste und das zweite Garn jeweils ein zusammenhängendes Netzwerk bilden und die Garne nicht umeinander gedreht sind.

Mit einer derartigen elastischen Kettwirkware, deren Dehnung nicht nur auf der Konstruktion des Gewirkes beruht, lassen sich Keilrippenriemen gut ausformen. Diese erfindungsgemäßen Keilrippenriemen führen im Betrieb auf Motoren zu langen Haltbarkeiten bei geringen Schallemissionen. Überraschend ist, dass die Riemen sowohl im frischen Zustand als auch bei längerer Laufzeit das gute Geräuschverhalten beibehalten. Der Aufbau aus zwei Garnen, von denen das eine elastisch, das andere nicht elastisch ist, gewährleistet eine gute Verarbeitbarkeit der Wirkware.

In einer Weiterbildung der Erfindung liegen das erste und das zweite Garn mindestens teilweise gemeinsam in den Maschen.

Diese Ausführung hat den Vorteil, dass die jeweils zusammenhängenden Netzwerke der Garne miteinander verbunden sind und so besser verarbeitbar sind. Dadurch, dass die Garne zwar mindestens teilweise in gemeinsamen Maschen liegen, aber dennoch voneinander unabhängige Netzwerke bilden, bleibt die Wirkware auch bei Zerstörung nur eines Netzwerkes, beispielsweise durch Abrieb, noch stabil und einsatzfähig.

In einer-weiteren Ausführungsform der Erfindung ist das erste Garn aus Polyamidfilamenten aufgebaut.

Polyamid weist eine gute Zugfestigkeit bei gleichzeitig guten Dehnungseigenschaften auf.

In einer weiteren Ausführungsform der Erfindung ist das erste Garn ein Polyamid 6 mit einem Titer zwischen 20 und 60 dtex.

Ein derartiges Polyamid weist eine besonders für diesen Anwendungsfall besonders geeignete Zugfestigkeit bei gleichzeitig guten Dehnungseigenschaften auf.

In einer weiteren Ausführungsform der Erfindung ist das erste Garn aus Polyesterfilamenten aufgebaut.

Polyester ist gegen die bei der Vulkanisierung der Keilrippenriemen auftretenden Temperaturen besonders gut beständig und weist eine gute Haftfähigkeit zu der umgebenden E-lastomermatrix auf.

In einer weiteren Ausführungsform der Erfindung ist das zweite Garn ein elastisches Polyurethan.

Elastisches Polyurethan ist als elastisches Material gut geeignet, bei der Herstellung die Rippen eines Keilrippenriemens auszuformen.

In einer weiteren Ausführungsform der Erfindung ist das zweite Garn ein Elasthan mit einem Gesamttiter von 20 bis 6 dtex.

Diese Garnart hat sich in Versuchen als besonders vorteilhaft für die Verarbeitbarkeit und der Geräuschentwicklung der Keilrippenriemen herausgestellt.

In einer weiteren Ausführungsform der Erfindung ist die Kettwirkware mit zwei Legeschienen nach folgendem Muster gewirkt, nämlich
- Legeschiene 1 mit elastischem Garn in geschlossener Tuchbindung der Abfolge 1-0-1/1-2-1 und
- Legeschiene 2 mit nicht elastischem Garn in geschlossener Trikotbindung der Abfolge 2-3-2/1-0-1

In einer weiteren Ausführungsform der Erfindung ist die Kettwirkware in gegenlegiger Konstruktion aufgebaut.

Mit einer Kettwirkware nach dieser Konstruktion lässt sich im Betrieb der Keilrippenriemen eine besonders gute Reduzierung der Schallemissionen erreichen. Dabei sind 4 Auflegearten möglich, nämlich Garn 1 oder Garn 2 außen und Wirkrichtung in Riemenrichtung oder Wirkrichtung senkrecht zur Riemenrichtung. Von diesen 4 Kombinationen erwies sich das Auflegen in Wirkrichtung nicht nur ökonomisch günstiger sondern auch in dynamischer Haltbarkeit als besser. Die außenliegenden Polyamidfasern schützen das Netzwerk besser vor Abrieb. Senkrecht zur Wirkrichtung liegendes Textil hat den Nachteil dass in der Riemenspitze lange Garne in Rippenrichtung liegen und frühzeitig dynamisch brechen. In Wirkrichtung verlegtes Gewebe verhält sich dynamisch besser, da nur ganz kurze Garnstücke in Riemenrichtung verlaufen und damit die Wirkware dynamisch stabiler ist. Die gegenlegige Konstruktion hat dabei den Vorteil, dass sich die Wirkware bei der Verarbeitung weniger verzieht.

Bei den erfindungsgemäßen fertigen Keilrippenriemen kommt es im Betrieb zunächst zu einer Verformung der Elasthanschicht, die sich als geräuschmindernde Schicht gleichmäßig zwischen das übrige Polyamidnetzwerk setzt. Gegen Ende des Riemenlebens tritt dann ein Verlust des Zusammenhangs des Polyamidnetzwerkes ein. Der Riemen bleibt aber auch in diesem Fall geräuschfrei, da die aus der Kombination von Elasthan und Polyamid oder Polyester bestehenden Maschen tief in der Gummimatrix sitzen. Diese Struktur aus Polyamid und Elasthan bleibt bis zum Lebensende des Keilrippenriemens erhalten, so dass bei fast allen getesteten Motoren keinerlei Quietschgeräusche auftreten.

In einer Weiterbildung der Erfindung ist auf der Kettwirkware eine geräuschvermindernde Gleitbeschichtung aufgebracht.

In einer weiteren Ausführungsform der Erfindung ist die geräuschvermindernde Gleitbeschichtung aus einer flexiblen Trägerschicht und Gleitkörpern aufgebaut.

In einer weiteren Ausführungsform der Erfindung besteht die flexible Trägerschicht überwiegend aus Polyurethan.

In einer weiteren Ausführungsform der Erfindung bestehen die Gleitkörper aus fluorhaltigen Polymeren.

In einer weiteren Ausführungsform der Erfindung bestehen die Gleitkörper aus PTFE.

In einzelnen Einsatzfällen ist es möglich, dass auch der Einsatz der beschriebenen Wirkware nicht unter allen Wetter- und Feuchtigkeitsbedingungen hohe Geräuschfreiheit garantieren kann. In diesen Fällen können die Keilrippenriemen auf der Textiloberfläche mit einer geräuschmindernden Gleitbeschichtung ausgerüstet werden. Die Behandlung des Riemens mit einer Kombinationsschicht aus Polyurethan und einem Gleitmittel, bevorzugt aus dem Bereich der Fluorpolymere erweist sich gerade hier als besonders vorteilhaft. Im Gegensatz zu den Gewebebeschichtungen in reinen Polyamidgeweben ergibt sich hier eine positive Verbindung der Polyurethane der Beschichtungsmittel mit dem Polyurethan des Elasthans aus dem Gewebe, so dass sich überraschenderweise eine Verlängerung der Quietschfreiheit bis and das Riemenlebensende ergibt. Das ist ein Vielfaches dessen, was mit einer Beschichtung eines elasthanfreien Gewebes erreichbar ist.

In einer weiteren Ausführungsform der Erfindung ist die geräuschvermindernde Gleitbeschichtung in einer von der Kettwirkware oder des Elastomermaterials abweichenden Farbe ausgeführt.

Mit Hilfe des Farbunterschiedes zur allgemein gebräuchlichen schwarzen bis schwarzgrauen Ausführung lässt sich der Verschleißzustand des Gewebes anzeigen. Solange die abweichende Farbe sichtbar ist, ist er noch betriebsfähig, beim Durchkommen der Grundfarbe der Elastomermischung oder des Textils ist an ein Austauschen des Riemens zu denken.

In einer Weiterbildung der Erfindung weist der Keilrippenriemen auf der der ersten Seite gegenüberliegenden zweiten Seite ebenfalls in Längsrichtung des Keilrippenriemens verlaufende Rippen mit im wesentlichen keilförmigem Querschnitt auf, die aus dem Elastomermaterial des Keilrippenriemens durch spanende Bearbeitung, insbesondere durch Schleifen gebildet sind.

Derartige Riemen lassen sich vorteilhaft für den geräuscharmen Antrieb weiterer Aggregate verwenden, die aufgrund der Geometrieverhältnisse des Antriebsstrangs mit der Rückseite der Keilrippenriemen angetrieben werden müssen. Dabei kann der Farbunterschied vorteilhaft als Unterscheidungsmerkmal der zwei Rippenseiten dienen. Da die Eigenschaften der verschiedenen Rippen unterschiedlich sind, kann es wichtig sein, wie der Keilrippenriemen montiert wird. Bei herkömmlichen doppelseitigen Keilrippenriemen sind die geformte und die geschliffene Seite optisch nur sehr schwer voneinander zu unterscheiden. Die unterschiedliche Farbe kann daher vorteilhaft als Unterscheidungsmerkmal genutzt werden.

In einer Weiterbildung der Erfindung weist die Schicht aus Kettwirkware eine Flockschicht auf.

Gemäß einer weiteren Ausführungsform der Erfindung ist die Flockschicht aus Baumwollflocken ausgebildet.

Gemäß einer weiteren Ausführungsform der Erfindung ist die Flockschicht aus Polyimidflocken ausgebildet.

Gemäß einer weiteren Ausführungsform der Erfindung ist die Flockschicht aus Aramidflocken ausgebildet.

Gemäß einer weiteren Ausführungsform der Erfindung ist die Flockschicht aus Viskoseflocken ausgebildet.

In besonders kritischen Einsatzfällen, beispielsweise bei Motoren mit extremer Ungleichförmigkeit und bei konstruktionsbedingt mangelndem Schutz des Riemens vor Regenwasser kann es notwendig sein, die Geräuschbildung gerade beim Einfluss großer Wassermengen zu vermeiden. Dazu erweist es sich als besonders günstig, eine Beflockung der Rippenseite der Keilrippenriemen vorzunehmen. Durch die textilbedingt raue Oberfläche wird ein Abreiben der Flockschicht im Gegensatz zu herkömmlichen Keilrippenriemen gänzlich verhindert. Die glatte Metallscheibe ist nicht mehr in der Lage, am Flockgrund anzugreifen und den Flock gänzlich abzureiben wie es bei textillosen Oberflächen unter ungünstigen Bedingungen mit Flockschichten auf glatten Gummioberflächen geschieht.

Messergebnisse zeigen, dass erstmals mit solchen textilbedeckten und gleichzeitig beflockten Riemen auch unter ungünstigsten Klimabedingungen selbst beim Ende des Riemenlebens keine Geräusche mehr entstehen.

In einer Weiterbildung der Erfindung weist die Kettwirkware eine elektrische Leitfähigkeit auf.

Gemäß einer weiteren Ausführungsform der Erfindung weist die Kettwirkware eine elektrisch leitfähige Oberflächenbeschichtung aus einem aufgedampften Metall auf.

Gemäß einer weiteren Ausführungsform der Erfindung ist die Kettwirkware aus elektrisch leitfähig beschichteten Garnen aufgebaut.

Gemäß einer weiteren Ausführungsform der Erfindung sind die Garne der Kettwirkware mit einem Metall bedampft.

Gemäß einer weiteren Ausführungsform der Erfindung sind die Garne der Kettwirkware mit Silber bedampft.

Die meisten Keilrippenriemen müssen eine elektrische Leitfähigkeit aufweisen, um statische Aufladungen zu verhindern. Die einfachste und preiswerteste Möglichkeit ist der Einsatz einer an sich leitfähigen Elastomermischung als Unterlage und die Wahl eines entsprechenden Vulkanisatinsprogramms das vor der Ausvulkanisation der Oberfläche die Elastomerschicht durchtreten lässt. Diese Maßnahme kann jedoch zu Geräuschen führen. Außerdem ist diese Möglichkeit nicht in allen Fällen gegeben, da andere Riemeneigenschaften wie beispielsweise ein notwendiger geringer Aufbau von Wärme beim Riemenbetrieb durch die Wahl von leitfähigen Elastomermischungen nicht erreicht werden können. In diesen Fällen ist es günstig, eine leitfähige Beschichtung auf die Textilschicht aufzubringen.

Eine weitere Möglichkeit ist, das Textil durch Bedampfen oder auch durch andere Verfahren mit einer leitfähigen Schicht zu versehen. Beste Ergebnisse ergeben Schichten aus Silber. Hierzu gibt es zwei Verfahren, nämlich das Bedampfen oder Behandeln des fertig gewirkten Textils vor der Verarbeitung oder die Wirkware aus metallisierten Fäden direkt herzustellen. Das teure Verfahren einer Vorbehandlung des flächigen Textils kann damit durch eine billigere Fadenbehandlung ersetzt werden.

Nachstehend wird die Erfindung anhand der Zeichnung näher erläutert. Es zeigt
- Fig. 1: einen Abschnitt eines doppelseitigen Keilrippenriemens in einer perspektivischen Prinzipdarstellung und
- Fig. 2: eine Prinzipdarstellung der erfindungsgemäßen Kettwirkware.

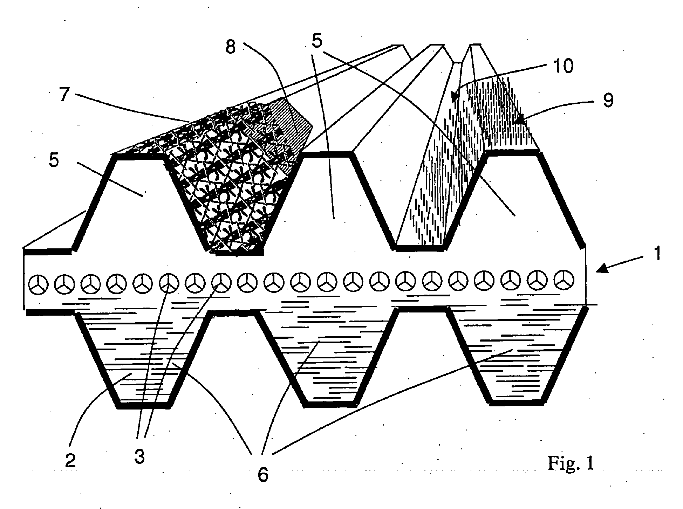

In Fig. 1 ist ein Abschnitt eines Keilrippenriemens 1 in einer prinzipiellen Darstellung gezeigt, der aus einer Elastomermischung 2 mit eingebetteten Zugträgern 3 aufgebaut ist. Der Keilrippenriemen 1 weist auf seiner ersten Seite keilförmige Rippen 5 auf, die in Längsrichtung des Keilrippenriemens 1 ausgerichtet sind und bei der Fertigung durch Vulkanisation gebildet wurden. Die auf der gegenüberliegenden Seite angeordneten Rippen 6 sind nach Ausvulkanisation des Keilrippenriemens 1 aus dem Elastomermaterial 2 durch Schleifen gebildet. Aus Gründen der Übersichtlichkeit sind hier jeweils nur drei nebeneinander liegende Rippen gezeigt, der Keilrippenriemen 1 kann jedoch weitere Rippen aufweisen. Die Rippen 5 weisen eine textile Schicht aus einer Kettwirkware 7 auf, die mit einer Gleitbeschichtung 8 ausgerüstet ist. Die Rippen 5 weisen weiterhin an ihrer Oberfläche eine Flockschicht 9 auf, die bis in den Grund 10 der Rippe 6 hineinreicht. Auf die Schicht aus einer Kettwirkware 7 ist entweder eine Gleitbeschichtung 8 oder eine Flockschicht 9 auf der gesamten Oberfläche der Kettwirkware 7 des Keilrippenriemens 1 aufgebracht. Die Schicht aus einer Kettwirkware 7 bedeckt die gesamte Oberfläche aller Rippen 5. Da es sich hier nur um eine Prinzipdarstellung handelt, sind von der Schicht aus einer Kettwirkware 7, der Gleitbeschichtung 8 und der Flockschicht 9 jeweils nur Ausschnitte gezeigt.

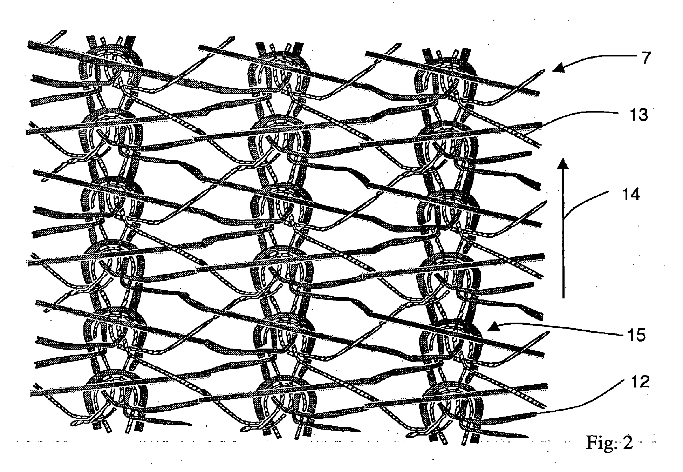

In Fig. 2 ist ein Teilausschnitt der Schicht aus einer Kettwirkware 7 in einer prinzipiellen Draufsicht gezeigt. Die Schicht aus einer Kettwirkware 7 ist aus einem ersten Garn 12 aus Elasthan und einem zweiten Garn 13 aus Polyamid gewirkt. Die Wirkrichtung 14 verläuft in dieser Darstellung vom unteren Rand der Figur zum oberen Rand der Figur und liegt parallel zur Laufrichtung der hier nicht sichtbaren Rippen. Die Darstellung zeigt, dass das erste Garn 12 nach einem Wirkmuster in geschlossener Tuchbindung der Abfolge 1-0-1/1-2-1 und das zweite Garn 13 nach einem Wirkmuster in geschlossener Trikotbindung der Abfolge 2-3-2/1-0-1 gewirkt ist. Das Gewirke ist in eine hier nicht gezeigte Elastomermischung aus peroxidisch vernetztem Ethylen-Propylen-Kautschuk eingebettet. In allen Maschen 15 der Kettwirkware 7 sind beide Garne 12 und 13 zusammengewirkt. Die Garne 12 und 13 bilden jedoch jedes für sich ein geschlossenes Netzwerk, das unabhängig vom jeweils anderen Bestand hat.

### Bezugszeichenliste

- 1: Keilrippenriemen
- 2: Elastomermischung
- 3: Zugträger
- 5: durch Vulkanisation gebildete Rippen
- 6: durch Schleifen gebildete Rippen
- 7: Schicht aus einer Kettwirkware
- 8: Gleitbeschichtung
- 9: Flockschicht
- 10: Grund der Rippen 5
- 12: erstes Garn
- 13: zweites Garn
- 14: Wirkrichtung
- 15: Maschen

## Patentansprüche

1. Keilrippenriemen (1) aus Elastomermaterial (2) mit eingebetteten Zugträgern (3), der mindestens auf einer ersten Seite in Längsrichtung des Keilrippenriemens (1) verlaufende Rippen (5) mit im wesentlichen keilförmigem Querschnitt aufweisen, die durch thermoplastische Formgebung gebildet sind und die erste Seite eine textile Schicht aufweist, **dadurch gekennzeichnet, dass** die textile Schicht als Kettwirkware (7) mit zwei unterschiedlichen Garnen (12, 13) ausgebildet ist, wobei das erste Garn (12) aus Filamenten mit einem Modul von mehr als 5N/1000dtex, bezogen auf 5% Dehnung und das zweite Garn (13) aus Filamenten mit einem Modul von weniger als 0,02 N/1000dtex, bezogen auf 5% Dehnung ausgebildet ist, wobei das erste (12) und das zweite Garn (13) jeweils ein zusammenhängendes Netzwerk bilden und die Garne (12, 13) nicht umeinander gedreht sind.

2. Keilrippenriemen (1) nach Anspruch 1, **dadurch gekennzeichnet, dass** das erste (12) und das zweite Garn (13) mindestens teilweise gemeinsam in den Maschen (15) der Kettwirkware (7) liegen.

3. Keilrippenriemen (1) nach Anspruch 1 oder 2, **dadurch gekennzeichnet, dass** das erste Garn (12) aus Polyamidfilamenten aufgebaut ist.

4. Keilrippenriemen (1) nach Anspruch 3, **dadurch gekennzeichnet, dass** das erste Garn (12) ein Polyamid 6 mit einem Titer zwischen 20 und 60 dtex ist

5. Keilrippenriemen (1) nach Anspruch 1 oder 2, **dadurch gekennzeichnet, dass** das erste Garn (12) aus Polyesterfilamenten aufgebaut ist

6. Keilrippenriemen (1) nach einem der vorhergehenden Ansprüche, **dadurch gekennzeichnet, dass** das zweite Garn (13) ein elastisches Polyurethan ist

7. Keilrippenriemen (1) nach Anspruch 6, **dadurch gekennzeichnet, dass** das zweite Garn (13) ein Elasthan mit einem Gesamttiter von 20 bis 6 dtex ist.

8. Keilrippenriemen (1) nach einem der vorherigen Ansprüche, **dadurch gekennzeichnet, dass** die Kettwirkware (7) mit zwei Legeschienen nach folgendem Muster gewirkt ist, nämlich
• Legeschiene 1 mit elastischem Garn (12) in geschlossener Tuchbindung der Abfolge 1-0-1/1-2-1 und
• Legeschiene 2 mit nicht elastischem Garn (13) in geschlossener Trikotbindung der Abfolge 2-3-2/1-0-1

9. Keilrippenriemen (1) nach einem der vorherigen Ansprüche, **dadurch gekennzeichnet, dass** die Kettwirkware (7) in gegenlegiger Konstruktion aufgebaut ist.

10. Keilrippenriemen (1) nach einem der vorherigen Ansprüche, **dadurch gekennzeichnet, dass** auf der Kettwirkware (7) eine geräuschvermindernde Gleitbeschichtung (8) aufgebracht ist.

11. Keilrippenriemen (1) nach Anspruch 10, **dadurch gekennzeichnet, dass** die geräuschvermindernde Gleitbeschichtung (8) aus einer flexiblen Trägerschicht und Gleitkörpern aufgebaut ist.

12. Keilrippenriemen (1) nach Anspruch 11, **dadurch gekennzeichnet, dass** die flexible Trägerschicht überwiegend aus Polyurethan besteht.

13. Keilrippenriemen (1) nach Anspruch 11, **dadurch gekennzeichnet, dass** die Gleitkörper aus fluorhaltigen Polymeren bestehen.

14. Keilrippenriemen (1) nach Anspruch 11, **dadurch gekennzeichnet, dass** die Gleitkörper aus PTFE bestehen.

15. Keilrippenriemen (1) nach Anspruch 10, **dadurch gekennzeichnet, dass** die geräuschvermindernde Gleitbeschichtung (8) in einer von der Kettwirkware (7) oder des Elastomermaterials (2) abweichenden Farbe ausgeführt ist.

16. Keilrippenriemen (1) nach einem der vorhergehenden Ansprüche, **dadurch gekennzeichnet, dass** der Keilrippenriemen (1) auf seiner der ersten Seite gegenüberliegenden zweiten Seite in Längsrichtung des Keilrippenriemens (1) verlaufende Rippen (6) mit im wesentlichen keilförmigem Querschnitt aufweist, die aus dem Elastomermaterial des Keilrippenriemens (1) durch spanende Bearbeitung, insbesondere durch Schleifen gebildet sind.

17. Keilrippenriemen (1) nach einem der Ansprüche 1 bis 9, **dadurch gekennzeichnet, dass** die Schicht aus Kettwirkware (7) eine Flockschicht (9) aufweist.

18. Keilrippenriemen (1) nach Anspruch 17, **dadurch gekennzeichnet, dass** die Flockschicht (9) aus Baumwollflocken ausgebildet ist.

19. Keilrippenriemen (1) nach Anspruch 17, **dadurch gekennzeichnet, dass** die Flockschicht (9) aus Polyimidflocken ausgebildet ist.

20. Keilrippenriemen (1) nach Anspruch 17, **dadurch gekennzeichnet, dass** die Flockschicht (9) aus Aramidflocken ausgebildet ist.

21. Keilrippenriemen (1) nach Anspruch 17, **dadurch gekennzeichnet, dass** die Flockschicht (9) aus Viskoseflocken ausgebildet ist.

22. Keilrippenriemen (1) nach einem der vorhergehenden Ansprüche, **dadurch gekennzeichnet, dass** die Kettwirkware (7) eine elektrische Leitfähigkeit aufweist.

23. Keilrippenriemen (1) nach Anspruch 22, **dadurch gekennzeichnet, dass** die Kettwirkware eine elektrisch leitfähige Oberflächenbeschichtung aus einem aufgedampften Metall aufweist.

24. Keilrippenriemen (1) nach Anspruch 22, **dadurch gekennzeichnet, dass** die Kettwirkware (7) aus elektrisch leitfähig beschichteten Garnen (12, 13) aufgebaut ist.

25. Keilrippenriemen (1) nach Anspruch 24, **dadurch gekennzeichnet, dass** die elektrisch leitfähigen Garne (12, 13) mit einem Metall bedampft sind.

26. Keilrippenriemen (1) nach Anspruch 25, **dadurch gekennzeichnet, dass** die elektrisch leitfähigen Garne (12, 13) mit Silber bedampft sind.

## Claims

1. V-ribbed belt (1) of elastomer material (2) with embedded tensile load-bearing elements (3), which has ribs (5) of a substantially wedge-shaped cross section that extend at least on a first side in the longitudinal direction of the V-ribbed belt (1) and are formed by thermoplastic shaping, and the first side has a textile layer, **characterized in that** the textile layer is formed as a warp-knitted fabric (7) having two different yarns (12, 13), the first yarn (12) being formed from filaments with a modulus of more than 5N/1000dtex, based on 5% extension, and the second yarn (13) being formed from filaments with a modulus of less than 0.02N/1000dtex, based on 5% extension, the first yarn (12) and the second yarn (13) in each case forming a coherent network and the yarns (12, 13) not being twined around one another.

2. V-ribbed belt (1) according to Claim 1, **characterized in that** the first yarn (12) and the second yarn (13) lie at least partially together in the loops (15) of the warp-knitted fabric (7).

3. V-ribbed belt (1) according to Claim 1 or 2, **characterized in that** the first yarn (12) is constructed from polyamide filaments.

4. V-ribbed belt (1) according to Claim 3, **characterized in that** the first yarn (12) is a polyamide 6 with a denier of between 20 and 60 dtex.

5. V-ribbed belt (1) according to Claim 1 or 2, **characterized in that** the first yarn (12) is constructed from polyester filaments.

6. V-ribbed belt (1) according to one of the preceding claims, **characterized in that** the second yarn (13) is an elastic polyurethane.

7. V-ribbed belt according to Claim 6, **characterized in that** the second yarn (13) is an elastane with a total denier of 20 to 60 dtex.

8. V-ribbed belt (1) according to one of the preceding claims, **characterized in that** the warp-knitted fabric (7) is knitted with two guide bars on the basis of the following pattern, namely
• guide bar 1 with elastic yarn (12) in closed plain weave of the sequence 1-0-1/1-2-1 and
• guide bar 2 with non-elastic yarn (13) in closed tricot weave of the sequence 2-3-2/1-0-1.

9. V-ribbed belt (1) according to one of the preceding claims, **characterized in that** the warp-knitted fabric (7) is constructed in counternotation.

10. V-ribbed belt (1) according to one of the preceding claims, **characterized in that** a noise-reducing antifriction coating (8) is applied to the warp-knitted fabric (7).

11. V-ribbed belt (1) according to Claim 10, **characterized in that** the noise-reducing antifriction coating (8) is constructed from a flexible carrier layer and sliding bodies.

12. V-ribbed belt (1) according to Claim 11, **characterized in that** the flexible carrier layer predominantly consists of polyurethane.

13. V-ribbed belt (1) according to Claim 11, **characterized in that** the sliding bodies consist of fluorine-containing polymers.

14. V-ribbed belt (1) according to Claim 11, **characterized in that** the sliding bodies consist of PTFE.

15. V-ribbed belt (1) according to Claim 10, **characterized in that** the noise-reducing antifriction coating (8) is made of a color other than that of the warp-knitted fabric (7) or the elastomer material (2).

16. V-ribbed belt (1) according to one of the preceding claims, **characterized in that** the V-ribbed belt (1) has ribs (6) of a substantially wedge-shaped cross section extending on its second side, opposite from the first side, in the longitudinal direction of the V-ribbed belt (1), which ribs are formed from the elastomer material of the V-ribbed belt (1) by machining, in particular by grinding.

17. V-ribbed belt (1) according to one of Claims 1 to 9, **characterized in that** the layer of warp-knitted fabric (7) has a flock layer (9).

18. V-ribbed belt (1) according to Claim 17, **characterized in that** the flock layer (9) is formed from cotton flocks.

19. V-ribbed belt (1) according to Claim 17, **characterized in that** the flock layer (9) is formed from polyimide flocks.

20. V-ribbed belt (1) according to Claim 17, **characterized in that** the flock layer (9) is formed from aramid flocks.

21. V-ribbed belt (1) according to Claim 17, **characterized in that** the flock layer (9) is formed from viscose flocks.

22. V-ribbed belt (1) according to one of the preceding claims, **characterized in that** the warp-knitted fabric (7) has an electrical conductivity.

23. V-ribbed belt (1) according to Claim 22, **characterized in that** the warp-knitted fabric has an electrically conductive surface coating of a vapor-deposited metal.

24. V-ribbed belt (1) according to Claim 22, **characterized in that** the warp-knitted fabric (7) is constructed from electrically conductively coated yarns (12, 13).

25. V-ribbed belt (1) according to Claim 24, **characterized in that** the electrically conductive yarns (12, 13) are vapor-coated with a metal.

26. V-ribbed belt (1) according to Claim 25, **characterized in that** the electrically conductive yarns (12, 13) are vapor-coated with silver.

## Revendications

1. Courroie trapézoïdale crantée (1) en matériau élastomère (2) dans lequel sont incorporés des supports de traction (3) et qui présente au moins sur un premier côté des nervures (5) de section essentiellement trapézoïdale qui s'étendent dans le sens de la longueur de la courroie trapézoïdale crantée (1) et formées par façonnage thermoplastique, le premier côté présentant une couche textile,
**caractérisée en ce que**
la couche textile est configurée comme tricot (7) à chaîne doté de deux fils différents (12, 13),
**en ce que** le premier fil (12) est constitué de filaments d'un module supérieur à 5 N/1 000 dtex à un allongement de 5 %,
**en ce que** le deuxième fil (13) est constitué de filaments d'un module inférieur à 0,02 N/1 000 dtex à un allongement de 5 % et
**en ce que** le premier fil (12) et le deuxième fil (13) forment tous deux un réseau continu et les fils (12, 13) ne sont pas torsadés l'un autour de l'autre.

2. Courroie trapézoïdale crantée (1) selon la revendication 1, **caractérisée en ce que** le premier fil (12) et le deuxième fil (13) sont situés au moins en partie conjointement dans les mailles (15) du tricot (7) à chaîne.

3. Courroie trapézoïdale crantée (1) selon les revendications 1 ou 2, **caractérisée en ce que** le premier fil (12) est constitué de filaments de polyamide.

4. Courroie trapézoïdale crantée (1) selon la revendication 3, **caractérisée en ce que** le premier fil (12) est un polyamide 6 d'un titre compris entre 20 et 60 dtex.

5. Courroie trapézoïdale crantée (1) selon les revendications 1 ou 2, **caractérisée en ce que** le premier fil (12) est constitué de filaments de polyester.

6. Courroie trapézoïdale crantée (1) selon l'une des revendications précédentes, **caractérisée en ce que** le deuxième fil (13) est en polyuréthane élastique.

7. Courroie trapézoïdale crantée (1) selon la revendication 6, **caractérisée en ce que** le deuxième fil (13) est en élasthane d'un titre total de 20 à 60 dtex.

8. Courroie trapézoïdale crantée (1) selon l'une des revendications précédentes, **caractérisée en ce que** le tricot (7) à chaîne est tricoté à l'aide de deux rails de pose qui présentent le motif suivant :
rail de pose 1 avec fil élastique (12) en armure de toile fermée et succession 1-0-1/1-2-1 et
rail de pose 2 avec le fil non élastique (13) en armure de tricot fermée et succession 2-3-2/1-0-1.

9. Courroie trapézoïdale crantée (1) selon l'une des revendications précédentes, **caractérisée en ce que** le tricot (7) à chaîne a une structure en opposition.

10. Courroie trapézoïdale crantée (1) selon l'une des revendications précédentes, **caractérisée en ce qu'**un revêtement glissant (8) de diminution du bruit est appliqué sur le tricot (7) à chaîne.

11. Courroie trapézoïdale crantée (1) selon la revendication 10, **caractérisée en ce que** le revêtement glissant (8) de diminution du bruit est constitué d'une couche de support flexible et de corps glissants.

12. Courroie trapézoïdale crantée (1) selon la revendication 11, **caractérisée en ce que** la couche flexible de support est principalement constituée de polyuréthane.

13. Courroie trapézoïdale crantée (1) selon la revendication 11, **caractérisée en ce que** les corps glissants sont constitués de polymères fluorés.

14. Courroie trapézoïdale crantée (1) selon la revendication 11, **caractérisée en ce que** les corps glissants sont constitués de PTFE.

15. Courroie trapézoïdale crantée (1) selon la revendication 10, **caractérisée en ce que** le revêtement glissant (8) de diminution du bruit est réalisé en une couleur différente de celles du tricot (7) à chaîne ou du matériau élastomère (2).

16. Courroie trapézoïdale crantée (1) selon l'une des revendications précédentes, **caractérisée en ce que** la courroie trapézoïdale crantée (1) présente sur son deuxième côté opposé au premier côté des nervures (6) de section transversale essentiellement trapézoïdale qui s'étendent dans le sens de la longueur de la courroie trapézoïdale crantée (1) et qui sont formées du matériau élastomère de la courroie trapézoïdale crantée (1) par un traitement à enlèvement de matière et en particulier par meulage.

17. Courroie trapézoïdale crantée (1) selon l'une des revendications 1 à 9, **caractérisée en ce que** la couche constituée du tricot (7) à chaîne présente une couche de flocage (9).

18. Courroie trapézoïdale crantée (1) selon la revendication 17, **caractérisée en ce que** la couche de flocage (9) est formée de flocons de coton.

19. Courroie trapézoïdale crantée (1) selon la revendication 17, **caractérisée en ce que** la couche de flocage (9) est formée de flocons de polyimide.

20. Courroie trapézoïdale crantée (1) selon la revendication 17, **caractérisée en ce que** la couche de flocage (9) est formée de flocons d'aramide.

21. Courroie trapézoïdale crantée (1) selon la revendication 17, **caractérisée en ce que** la couche de flocage (9) est formée de flocons de viscose.

22. Courroie trapézoïdale crantée (1) selon l'une des revendications précédentes, **caractérisée en ce que** le tricot (7) à chaîne présente une conductivité électrique.

23. Courroie trapézoïdale crantée (1) selon la revendication 22, **caractérisée en ce que** le tricot à chaîne présente un revêtement de surface électriquement conducteur constitué d'un métal vaporisé.

24. Courroie trapézoïdale crantée (1) selon la revendication 22, **caractérisée en ce que** le tricot (7) à chaîne est constitué de fils (12, 13) revêtus de manière à devenir électriquement conducteurs.

25. Courroie trapézoïdale crantée (1) selon la revendication 24, **caractérisée en ce qu'**un métal est vaporisé sur les fils (12, 13) électriquement conducteurs.

26. Courroie trapézoïdale crantée (1) selon la revendication 25, **caractérisée en ce que** de l'argent est vaporisé sur les fils (12, 13) électriquement conducteurs.
